# EUROPEAN PATENT SPECIFICATION

(11) **EP 2 288 553 B1**
(45) Date of publication and mention of the grant of the patent: **02.04.2014**
(21) Application number: 09729349.2
(22) Date of filing: 08.04.2009
(51) Int. Cl.: B65D 23/10, B29C 45/14, B29C 45/16, B29B 11/14, B29B 11/08, B29C 49/06, B29C 49/22

(54) **OVERMOLDED CONTAINERS WITH IMPROVED GRIP AND METHOD OF MANUFACTURE THEREOF**
UMSPRITZTE BEHÄLTER MIT VERBESSERTEM HANDGRIFF UND VERFAHREN ZU DEREN HERSTELLUNG
RÉCIPIENTS SURMOULÉS AVEC PRISE EN MAIN AMÉLIORÉE ET PROCÉDÉ POUR LES FABRIQUER

(30) Priority: 08.04.2008 US 99404
(43) Date of publication of application: 02.03.2011
(73) Proprietor: Colgate-Palmolive Company, New York, NY 10022 (US)
(72) Inventor: SHI, Yu, Branchburg NJ 08876 (US)
(74) Representative: Jenkins, Peter David
(86) International application number: PCT/US2009/039910
(87) International publication number: WO 2009/126712

(56) References cited:
- WO-A1-2005/075308
- GB-A- 2 328 926
- JP-A- 2000 271 991
- US-A1- 2006 210 746
- US-B1- 6 432 525

## Description

### Background of the Invention

This invention relates generally to molded polymeric containers, and more particularly to methods for making overmolded containers, which enhance the gripping of the containers.

Polyethylene terephthalate (PET) based polyesters have been widely used as container materials because of their good mechanical properties and barrier properties. Containers made from PET, however, typically have hard and smooth surfaces. These surfaces are difficult to grip, and containers can slip from a consumer's hand, causing the container contents to spill. This loss of grip is often exacerbated when a filled container product (e.g., a container containing a beverage) that has been stored at low temperature (e.g., in a refrigerator) is taken out for use at room temperature such that water condenses onto the outside of the container. This loss of grip is also present for containers that are used in a wet environment such as containers of oral and personal care products such as mouth washes, shampoos, conditioners, shower gels and body washes. In addition containers that are used for household cleaning products lose some of their grippability when a person's hands are wet. Such containers include those used for dish detergents and for tile, tub, shower and other hard surface cleaning. It therefore would be highly desirable to improve the grippability of PET containers, as well as other thermoplastic polymeric containers, especially for product containers that frequently find use in conditions under which the outside of the containers and/or a person's hands are wetted prior to or during use. As used herein, the terms "grippable" and "grippability" refer to the characteristic of a surface of a container that one is able to hold firmly, without slipping from one's grasp.

Overmolding or multi-component molding has been widely used in the injection molding industry. Overmolding is essentially defined as a process that produces finished components with two or more thermoplastic based resins by way of injection molding. When there are two overmolding components the technique also is known as bi-injection molding. Overmolding has been used in the cable industry for many years, and has found increasing interest in the industrial and consumer goods industries. In these industries, many applications combine a soft touch material with rigid parts. The soft touch materials provide improved aesthetics, better tactile properties, and improved grippability. The most widely used method of combining a soft and rigid material is by overmolding onto the surface of a finished product such as a container. Traditionally, overmolding of the soft material directly onto the rigid material creates the finished product part. It would be desirable to provide techniques to apply soft touch materials onto rigid containers at the time that the container is being produced. This is a part of the present invention. Overmolded layers are applied to container preforms which results in the overmolded layer being a part of the exterior of the container after blow molding.

A significant improvement in gripability can be achieved in a combination of improved grip designs on the container and an overmolding of the areas of these grip designs to enhance the gripping of the container. The objective is to increase the gripping of a container by improving the grips built into the container as an integral part of the container. This is particularly important with regard to containers for personal care products, where in addition to the containers and the person's hands being wet, the exterior surface of the container and the person's hands can have a layer of a soap. Soaps are well known lubricants. The forming of grips on a container and the overmolding of the grips of a container will significantly reduce the dropping of containers being used in wet environments. This is an effect of the combination of the grips on the container and the overmolded material.

A need therefore exists in the packaging industry to create a container with enhanced gripping functions and/or other functions, and to achieve these design features without negatively impacting the PET or other thermoplastic recycling stream. Furthermore, there exists a need in the packaging industry to create such a container with a cost-effective process.

Nearest prior art document US-A-2006/0210746 discloses overmolded containers and methods of manufacture and use thereof, GB-A-2,328,926 discloses a dispensing container suitable for use by children and adults. WO-A-2005/075308 discloses a container having a helical grip.

### Summary of the Invention

The present invention provides a blow molded container with improved grips according to claim 1, and a method according to claim 4 of making a blow molded container with improved gripping. Preferred features are defined in the dependent claims.

Methods for making overmolded containers are provided. The overmolded containers advantageously provide enhanced grippability as well as visual and tactile characteristics, enabling innovative packaging designs. The methods of manufacture accomplish these container advantages in a cost effective manner, with no or minimal impacting on materials recycling streams.

In one aspect, the method of making the container includes the steps of providing a preform for a container, the preform comprising a thermoplastic polymer; overmolding an elastomeric overmold material over at least a portion of the preform that is to contain grips; orienting the preform in the mold so that the overmolded sections are adjacent to the mold grip areas; and blow-molding the overmolded preform to form an overmolded container with the container grips being overmolded with the elastomeric material. In one preferred embodiment, the overmolding container is a beverage container. In another preferred embodiment the container is any one of a mouth wash, body wash, shower gel, shampoo, or dish detergent container.

The preform can be made from a variety of thermoplastic polymers. In one embodiment, the thermoplastic polymer includes one or more polyesters. In a preferred embodiment, the thermoplastic polymer is, or includes, a polyethylene terephthalate copolymer.

The overmold material is selected to be processible at temperatures and pressures compatible with the blow molding process, so that the overmold material is able to conformingly stretch, with the preform, and take the shape of the resulting blow molded container. In one embodiment, the overmolded material comprises a thermoplastic elastomer. Examples of suitable overmold materials include polyolefin elastomers, polyolefin plastomers, modified polyolefin elastomers, modified polyolefin plastomers, thermoplastic urethane elastomers, block copolymers, elastomer blends and combinations thereof. Block copolymers include styrenic, co-polyester, polyurethane, polyamide, polyolefin blends and polyolefin alloys.

In one mode, the overmold material has a density less than 1.00 g/cc, which may facilitate ultimate recycling of the thermoplastic polymer, for example, by an aqueous sink-float operation that relies on density differences between the thermoplastic polymer and the overmold material.

The overmold material optionally may include one or more additives. Examples of possible additives include colorants, UV blockers, lubricants, slip agents, processing aids, oxidative stabilizers, thermal stabilizers, and combinations thereof.

In one embodiment, the container includes a container body having an outer surface with integral grips and an interior space, wherein the container body is formed by blow molding a thermoplastic polymer preform; and an overmolded layer conformingly secured to at least a portion of the outer surface of the container body that are to comprise the grips.

In another embodiment, the container is cylindrical and includes one or more hand grips as an integral part of the container. The overmolded layer comprises an overmolding material that covers the hand grips that are an integral part of the container. In another embodiment, the overmolded layer covers the integral grips and a part of the other wall areas of the container.

In yet another embodiment, the container is a non-cylindrical container, such as an oval container, and is provided with integral grips that have an overmolded layer. The overmolded layer is a polymeric layer having a coefficient of friction greater than that of the surface of the blow molded container. That includes among other things, a blow molded container, preferably formed from a PET copolymer; an overmolded layer comprising an ethylene alpha-olefin resin or other polyolefin elastomer or plastomer, wherein the overmolded layer is conformingly secured to at least a portion of the outer surface of the container comprising the container grips..

### Brief Description of the Figures

Figure 1 is an elevation view of a preform that has a overmolded layer on a portion of the preform.
Figure 2 is an elevation view of a container with an overmolded layer on the grips produced from the preform of Figure 1.
Figure 3 is an elevation view of a preform that has an overmolded layer on an upper part of the preform.
Figure 4A is an elevation view of the front of the container (not in accordance with the present invention) with an overmolded layer on grips on an upper part of a container produced from the preform of Figure 3.
Figure 4B is an elevation view of the rear of the container (not in accordance with the present invention) with an overmolded layer on grips on an upper part of a container produced from the preform of Figure 3.
Figure 5 is an elevation view of a preform that has an overmolded layer on a lower part of the preform
Figure 6 is an elevation view of the container (not in accordance with the present invention) with an overmolded layer on grips on a lower part of a container produced from the preform of Figure 5.
Figure 7 is an elevation view of a circular container with an overmolded layer on grips of a container produced from the preform of Figure 1.
Figure 8 is a cross-section of the container of Figure 7 along line 8-8.

### Detailed Description of the Invention

The invention will be described in more detail in its preferred embodiments with reference to the drawings. The invention may be modified but will remain within the present inventive concept.

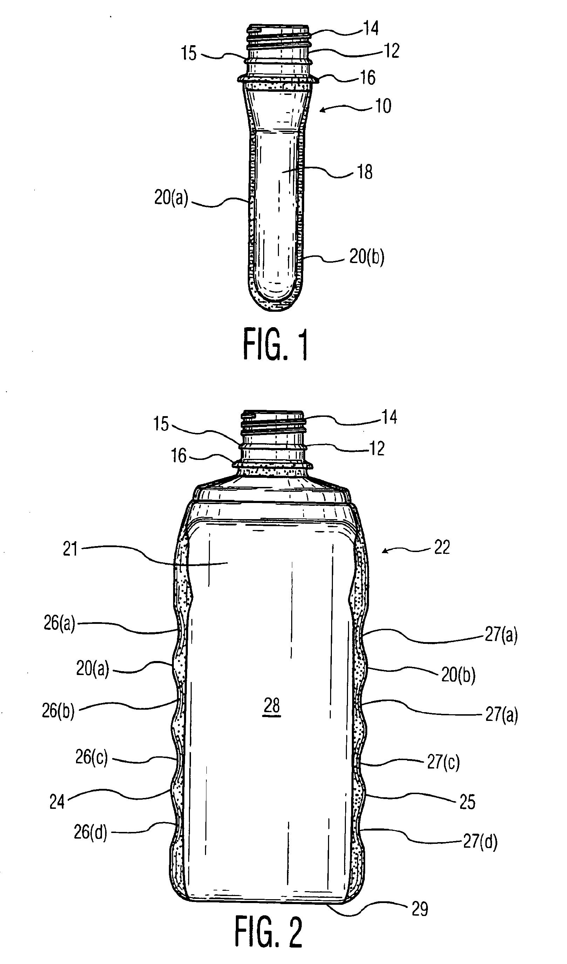

Figure 1 shows a preform 10 which has a lower extended portion 18 and an upper portion 12 with threads 14. Also on the upper portion is a cap seal flange 15 and a transport flange 16 which supports the preform through a preheating and when it is conveyed into the mold. The lower part 18 of the preform has overmolded layers 20(a) and 20(b) which are in a U-shape on the preform 10. The overmolded layers 20(a) and 20(b) have a thickness of about 0.05 mm to about 5 mm, and preferably about 0.1 to about 3mm. The width of an overmolded part will be determined by the area of the grips that is to be covered on the completed blowmolded container. The overmolded layer will have a U-shape with any excess material on the bottom of the container blown from the preform being removed from the blowmolded container. The blowmolded container 22 (according to the present invention) formed from this preform is shown in Figure 2. The upper part of the container 22 is the same as the preform. There is the neck 12 with threads 14 cap seal flange 15 and the transport flange 16. The container 22 has a shoulder 21 and a container body 28. The container body has a bottom surface 29 and side surfaces 24 and 25, with each of these side surfaces having a plurality of grips. The side surface 24 has grips 26(a), 26(b), 26(c) and 26(d) and the side surface 25 has grips 27(a), 27(b), 27(c) and 27(d). The grips 26(a), 26(b), 26(c) and 26(d) are covered with the overmolded layer 20(a) and the grips 27(a), 27(b), 27(c) and 27(d) are covered with overmolded layer 20(b). The overmolded layer is only on the grips which leaves the full front and rear surfaces of the container free for a label and for product information, some of which is legally required to be on the container.

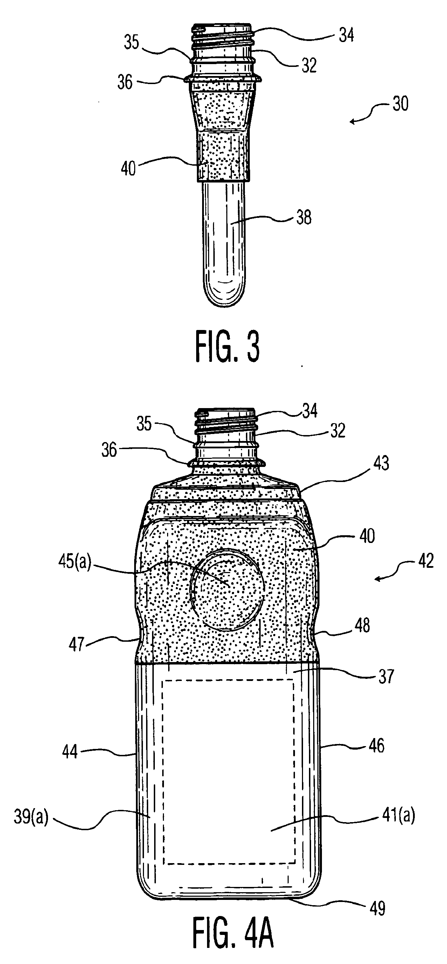

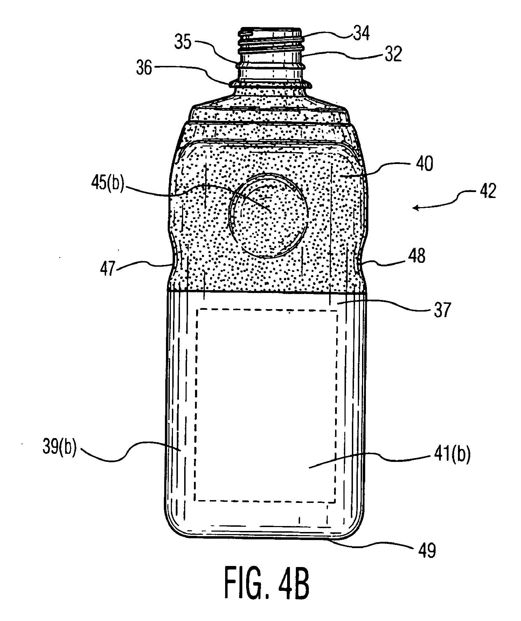

Figure 3 is a preform to be used to provide a grip on the front surface and the side surfaces of a container (which container is not in accordance with the present invention). The preform has an upper portion 32 and a lower portion 38. The upper portion has threads 34, cap sealing flange 35 and transport flange 36. There is an overmolded layer 40 on the preform. This preform is blowmolded to form container 42 of Figure 4A. The front view of the container is shown in Figure 4A. This container has a neck 32 with threads 34, cap sealing flange 35 and transport flange 36. The container body 37 has a bottom surface 49 and a front surface 39(a) with label area 41(a). The upper part of the container body has an overmolded layer 40 and a grip recess area 45(a) in the front container surface 39(a). There also are grip recesses 47 and 48 in sidewalls 44 and 46 respectively. The thickness of the overmolded layer will be the same as for the preform of Figure 1. However, in this embodiment the overmolded layer will cover the upper area of the lower portion 38 of the preform. When the container is formed by blowmolding the overmolded layer 40 will cover an upper part of the front container surface 39(a). Figure 4B shows a rear view of the container of Figure 4A. There is rear container surface 39(b) with label area 41 (b) and a recesses grip area 45(b). Otherwise the container rear view is essentially the same as the front view of Figure 4A.

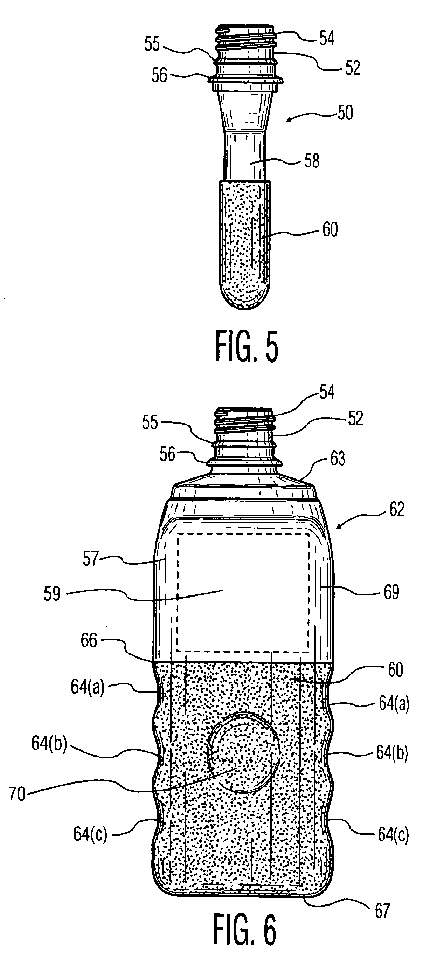

Figure 5 shows a preform 50 with an upper portion 52 with threads 54, cap flange 55 and transport flange 56. The lower portion 58 of the preform has an overmolded layer 60. This overmolded layer will have a thickness similar to that of the overmolded layer of Figure 1. It will have to be of a sufficient thickness the cover the lower portion of a container when the preform is blowmolded to form the container. The blowmolded container from this preform 50 is shown in Figure 6 (which container is not in accordance with the present invention). The blowmolded container 62 has a shoulder 63 and a neck 52. The neck 52 has threads 54, cap flange 55 and transport flange 56. The container body 57 of container 62 has a front surface 69 and a bottom surface 67. The upper portion of container surface 69 has label area 59. The lower portion of container body 57 has side grips 64(a), 64(b) and 64(c) on side surface 66 and side grips 65(a), 65(b) and 65(c) on side surface 68. There also is a recessed grip area 70 on the front surface 57. This container will be gripped on a lower part of the container during the dispensing of the contents from the bottle.

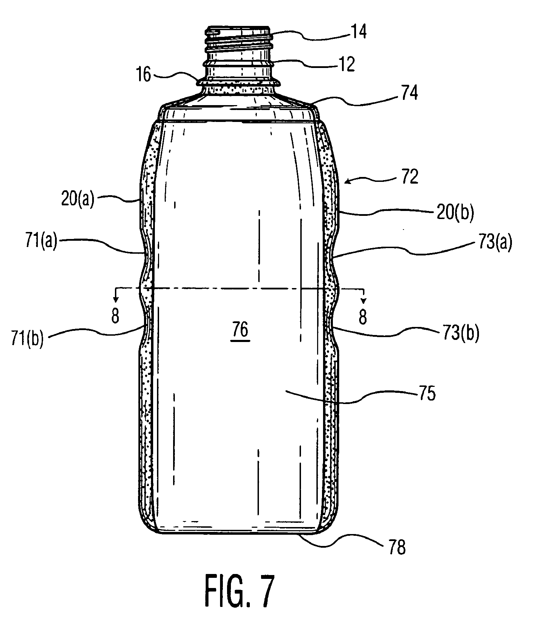

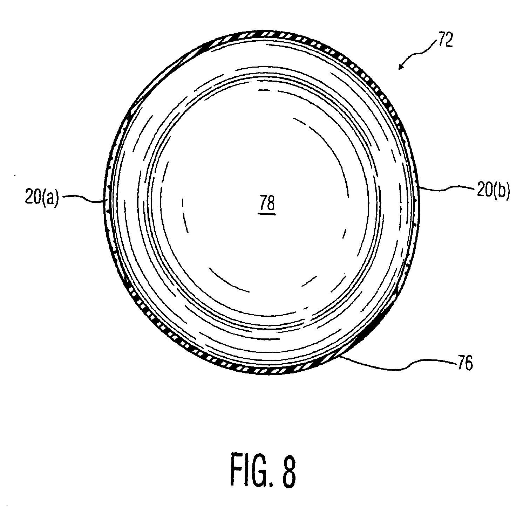

Figure 7 shows a container 72 according to the present invention which has which has a circular cross-section. This container is blowmolded using the preform of Figure 1. The preform is placed in a mold having a mold cavity with a circular cross-section inner surface that is the negative structure of the container of this Figure 7. This container has a shoulder 74, neck 12 with threads 14, cap flange 15 and transport flange 16. The container has a body 75, a body surface 76 and a bottom surface 78. About 180 degrees apart are grips 71(a)/71(b) and 73(a)/73(b). The grips 71(a)/71(b) have an overmold covering layer 20(a) and grips 73(a)/73(b) have an overmold covering layer 20(b). Figure 8 is a cross-section of the container of Figure 7 along line 8-8 of the container body 75 looking towards the bottom 78 of the container. There is shown circular body surface 76 with overmold covering layers 20(a) and 20(b). Essentially only the grips have an overmolded layer with the remainder of the container available for labeling. When the container is being held, and particularly when a product is being dispensed from the container a person will grip the container using these overmolded grips.

Essentially any shaped container that is to have integrally molded grips can be made using the present processes. The processes are not restricted to any particular shaped containers. These can be oval to polygonal from triangular to octagonal and beyond. In addition when polygonal the sides do not have to be equal in length nor the container be symmetrical.

The process for making the overmolded preform is described in U.S. Application No. 11/307,700. First, a suitable preform capable of being overmolded is provided. Then, the preform is overmolded with the elastomeric material, for example using known injection molding techniques, the elastomeric overmold material injection molded onto the surface of the preform thus forming the overmolded preform. Next, the overmolded preform is blow-molded, for example using stretch blow molding. The non-overmolded surface of the preform and of the blomolded container will have a coefficient of friction COF) of less than 1, and usually about 0.2 to 0.8. The overmolded surfaces of the preform and of the container will have a COF of more than 1 and usually more than 1.5.

The preform can be made from a variety of thermoplastic polymers. In one embodiment, the thermoplastic polymer includes one or more polyesters. In one embodiment, the thermoplastic polymer includes a polypropylene. In a preferred embodiment, the thermoplastic polymer is or includes a polyethylene terephthalate copolymer. Suitable polyesters include PET copolymers, polyethylene naphthalate (PEN), polyethylene isophthalate, glycol modified amorphous PET copolymer, (commercially known as PETG), diacid modified amorphous PET, and the like. PET copolymers are particularly useful because they are used in many container applications. As used herein, "PET copolymers" refers to those compositions that comprise a diol component having repeat units from ethylene glycol and a diacid component having repeat units from terephthalic acid. Desirably, in some embodiments, the PET copolymer has less than 20% diacid component modification and/or less than 10% diol component modification, based on 100 mole % diacid component and 100 mole % diol component. Such PET copolymers are well known.

Optionally, a multi-layer preform may be used. For example, the preform could comprise a 3- or 5-layer structure, as known in the art. In one embodiment of a 3-layer preform structure, the middle layer is a barrier layer, the product-contacting layer and the external layer are polyester layers. In one embodiment of a 5-layer preform structure, the inside and outside layer are virgin polyester layers, the second and fourth layers are recycled PET layers, and the third layer is a barrier layer.

The amount of surface of the preform covered by the overmold material can vary, depending for example, on the particular design of the container being made and the size, number and placement of the grips. It is an objective to overmold the grip areas and to leave as much space as possible available for labeling and the decoration of the container.

The term "thermoplastic elastomer" includes elastomers, plastomers, modified elastomers, and modified plastomers, block copolymers, blends and alloys as these are known in the art. Representative examples of suitable thermoplastic elastomers, which may be used with conventional injection molding equipment, include polyolefin elastomers (such as ethylene-propylene rubbers), polyolefin plastomers, modified polyolefin elastomers (such as ter-polymers of ethylene, propylene and styrene), modified polyolefin plastomers, thermoplastic urethane elastomers, acrylic-olefin copolymer elastomers, polyester elastomers, and combinations thereof. Specific, but non-limiting, examples of commercially available overmold materials include VERSIFY^{™} plastomer and Affinity^{™} elastomers from Dow Chemical Company; Sarlink^{™} and Versalloy^{™} from DSM; Dynaflex^{™}, Kraton^{™}, and Versaflex^{™} from GLS Corporation; Santoprene^{™} from Exxon Mobil; Uniprene; Tekbond; Elexar; Monprene; Tekron from Teknor Apex; and the like. Some of these materials are further described in Batistini, Macromol. Symp. 100:137-42 (1995).

The thermoplastic elastomer desirably has a density less than 1.00 g/cc. This can facilitate separation and recycling of the thermoplastic polymer and/or overmold material. The layer of overmolded material on the overmolded container has a thickness of about 0.05 mm to about 5 mm, preferably from about 0.1 mm to about 3 mm. The thermoplastic elastomer desirably has a softness/harness less than Shore D 45, preferably less than Shore D 30.

The overmold material may include one or more additives. Examples of possible additives include pigments and other colorants, UV blockers, lubricants or slip agents, processing aids, anti-oxidants, antimicrobial additives, and thermal stabilizers, as these are known in the art, as well as combinations thereof. In one embodiment, a slip agent is added to improve container-to-container friction that occurs in a manufacturing process line (e.g., in an air conveyor). In another embodiment, the overmold material may include compounds having functional groups to improve adhesion, if desired, between the overmold layer and the underlying thermoplastic layer.

Generally, embodiments of this invention can be made with blow molding. The various methods of blow molding are well known. In a preferred embodiment, the blow-molding process comprises a preform reheat stretch blow mold process, as is well known in the art. Such a process comprises providing a preform that has an elastomer layer selectively on the preform to conform to at least one grip area of the desired blow molded container, heating this preform to soften the preform thermoplastic, providing a mold with a mold cavity having on its inner surface the negative of the at least one grip area in the mold cavity inner surface, orienting the preform in the mold cavity so that the elastomer layer is adjacent to the negative of the at least one grip area, injecting a gas into the preform to blow the preform wall to the surface of the mold cavity whereby the elastomer layer of the preform will contact the negative of the at least one grip area on the surface of the mold cavity to form a blow molded container with the grip area containing a layer of the elastomer. There is commercially available equipment to blow mold containers.

A wide variety of overmolded, blow molded container can be made. The overmolded container may be used for essentially any food, beverage, personal care, home care or pharmaceutical product. Representative examples of suitable types of overmolded containers include containers, jars, drums, carafes, coolers, and the like.

## Claims

1. A blow molded container (22) with improved grips comprising a blow molded container (22) having a container body (28) and a container dispensing exit, the container body (28) having a front surface, a rear surface and a right side surface and a left side surface connecting the front surface to the rear surface, **characterized in that** at least one of the right side surface and the left side surface has a grip area (26(a), 26(b), 26(c) 26(d), 27(a), 27(b), 27(c) 27(d)) the grip area (26(a), 26(b), 26(c), 26(d), 27(a), 27(b), 27(c) 27(d)) overmolded with an elastomer to form a blow molded container (22) with the grip area (26(a), 26(b), 26(c), 26(d), 27(a), 27(b), 27(c) 27(d)) containing a layer (20(a), 20(b)) of said elastomer, the elastomer having a coefficient of friction greater than the coefficient of friction of the surface of said container (22), wherein the entire grip area (26(a), 26(b), 26(c), 26(d), 27(a), 27(b), 27(c) 27(d)) has a layer (20(a), 20(b)) of said elastomer, and the layer (20(a), 20(b) of elastomer is only on the grip area (26(a), 26(b), 26(c), 26(d), 27(a), 27(b), 27(c) 27(d)), leaving the front and rear surfaces of the container (22) free of elastomer.

2. A blow molded container as in claim 1 wherein the right side surface and the left side surface each have a grip area (26(a), 26(b), 26(c), 26(d), 27(a), 27(b), 27(c) 27(d)), the entire grip area (26(a), 26(b), 26(c), 26(d), 27(a), 27(b), 27(c) 27(d)) having a layer (20(a), 20(b)) of said elastomer.

3. A blow molded container as in claim 1 wherein the container (22) is cylindrical.

4. A method of making a blow molded container (22) as in any one of claims 1 to 3 with improved gripping, the container (22) having a container body (28) and a container dispensing exit, the container body (28) having a front surface, a rear surface and a right side surface and a left side surface connecting the front surface to the rear surface, wherein at least one of the right side surface and the left side surface has a grip area (26(a), 26(b), 26(c), 26(d), 27(a), 27(b), 27(c) 27(d)), the grip area (26(a), 26(b), 26(c), 26(d), 27(a), 27(b), 27(c) 27(d)) overmolded with an elastomer, the method comprising providing a preform (10) that has an elastomer layer (20(a), 20(b) selectively on the preform (10) to conform to the grip area (26(a), 26(b), 26(c), 26(d), 27(a), 27(b), 27(c) 27(d)) of the blow molded container (22), providing a mold with a mold cavity having on its inner surface the negative of the grip area (26(a), 26(b), 26(c), 26(d), 27(a), 27(b), 27(c) 27(d)) in the mold cavity inner surface; orienting the preform (10) in the mold cavity so that the elastomer layer (20(a), 20(b) is adjacent to the negative of the grip area (26(a), 26(b), 26(c), 26(d), 27(a), 27(b), 27(c) 27(d)); injecting a gas into the preform (10) to blow the perform (10) wall to the surface of the mold cavity whereby the elastomer layer (20(a), 20(b)) of the preform (10) will contact the negative of the grip area (26(a), 26(b), 26(c), 26(d), 27(a), 27(b), 27(c) 27(d)) on the surface of the mold cavity to form a blow molded container (22)with the grip area (26(a), 26(b), 26(c), 26(d), 27(a), 27(b), 27(c) 27(d)) containing a layer (20(a), 20(b)) of said elastomer, said elastomer having a coefficient of friction greater than the surface of the container (22), wherein the entire grip area (26(a), 26(b), 26(c), 26(d), 27(a), 27(b), 27(c) 27(d)) has a layer (20(a), 20(b)) of said elastomer, and the layer (20(a) 20(b)) of elastomer is only on the grip area (26(a), 26(b), 26(c), 26(d), 27(a), 27(b), 27(c) 27(d)) of the container (22), leaving the front and rear surfaces of the container (22) free of elastomer.

5. A method of making a blow molded container (22) as in claim 4 wherein the right side surface and the left side surface each have a grip area (26(a), 26(b), 26(c), 26(d), 27(a), 27(b), 27(c) 27(d)), the entire grip area (26(a), 26(b), 26(c), 26(d), 27(a), 27(b), 27(c) 27(d)) having a layer (20(a), 20(b)) of said elastomer.

6. A method of making a blow molded container as in any one of claims 4 or 5 wherein the container (22) has a cylindrical cross-section.

## Patentansprüche

1. Ein mit verbesserten Griffen versehener blasgeformter Behälter (22), der einen blasgeformten Behälter (22) mit einem Behälterkörper (28) und einem Behälterdosierauslauf umfasst, wobei der Behälterkörper (28) zur Verbindung der vorderen und hinteren Oberfläche eine vordere, eine hintere sowie eine rechts- und eine linksseitige Oberfläche hat, **dadurch gekennzeichnet, dass** mindestens eine der rechts- und der linksseitigen Oberflächen einen Greifbereich (26(a), 26(b), 26(c), 26(d), 27(a), 27(b), 27(c), 27(d)) aufweist und auf diesem Greifbereich (26(a), 26(b), 26(c), 26(d), 27(a), 27(b), 27(c), 27(d)) ein Elastomer ausgespritzt ist, um einen blasgeformten Behälter (22) zu formen, dessen Greifbereich (26(a), 26(b), 26(c), 26(d), 27(a), 27(b), 27(c), 27(d)) eine Schicht (20(a), 20(b)) besagten Elastomers enthält, wobei das Elastomer einen Reibungskoeffizienten hat, der größer als der Reibungskoeffizient Oberfläche besagten Behälters (22) ist, wobei der gesamte Greifbereich (26(a), 26(b), 26(c), 26(d), 27(a), 27(b), 27(c), 27(d)) eine Schicht (20(a), 20(b)) besagten Elastomers hat und diese Elastomerschicht (20(a), 20(b)) sich einzig im Greifbereich (26(a), 26(b), 26(c), 26(d), 27(a), 27(b), 27(c), 27(d)) befindet, sodass die vorderen und hinteren Oberflächen Behälters (22) frei von Elastomer sind.

2. Ein Anspruch 1 entsprechender blasgeformter Behälter, dessen rechts- und linksseitigen Oberflächen jeweils einen Greifbereich (26(a), 26(b), 26(c), 26(d), 27(a), 27(b), 27(c), 27(d)) aufweisen, wobei der gesamte Greifbereich (26(a), 26(b), 26(c), 26(d), 27(a), 27(b), 27(c), 27(d)) mit einer Schicht (20(a), 20(b)) besagten Elastomers versehen ist.

3. Ein Anspruch 1 entsprechender blasgeformter Behälter (22), der zylindrisch ist.

4. Ein Verfahren zum Anfertigen eines einem der Ansprüche 1 bis 3 entsprechenden blasgeformten Behälters (22) mit verbessertem Griff, wobei der Behälter (22) einen Behälterkörper (28) sowie einen Behälterdosierauslauf und der Behälterkörper (28) zur Verbindung der vorderen und der hinteren Oberfläche eine vordere, eine hintere sowie eine rechts- und eine linksseitige Oberfläche aufweist, wobei mindestens eine der rechts- und der linksseitigen Oberflächen einen Greifbereich (26(a), 26(b), 26(c), 26(d), 27(a), 27(b), 27(c), 27(d)) aufweist, auf den (26(a), 26(b), 26(c), 26(d), 27(a), 27(b), 27(c), 27(d)) ein Elastomer aufgespritzt ist, und wobei dieses Verfahren einen Vorformling (10) mit einer selektiven Elastomerschicht (20(a), 20(b)) umfasst, die dem Greifbereich (26(a), 26(b), 26(c), 26(d), 27(a), 27(b), 27(c), 27(d)) des blasgeformten Behälters (22) entspricht, wodurch eine Form mit einem Formhohlraum gebildet wird und dieser Formhohlraum auf seiner Innenseite das Negativ des Greifbereichs (26(a), 26(b), 26(c), 26(d), 27(a), 27(b), 27(c), 27(d)) aufweist; wobei der Vorformling (10) im Formhohlraum so ausgerichtet ist, sodass die Elastomerschicht (20(a), 20(b)) neben dem Negativ des Greifbereichs (26(a), 26(b), 26(c), 26(d), 27(a), 27(b), 27(c), 27(d)) angeordnet ist; wobei ein Gas in den Vorformling (10) eingespritzt wird, um die Wandung vorformlings (10) an die Oberfläche des Formhohlraums zu blasen, sodass die Elastomerschicht (20(a), 20(b)) des Vorformlings (10) das Negativ des Greifbereich (26(a), 26(b), 26(c), 26(d), 27(a), 27(b), 27(c), 27(d)) an der Oberfläche des Formhohlraums kontaktierten wird, um einem aus Behälter (22) mit dem Greifbereich (26(a), 26(b), 26(c), 26(d), 27(a), 27(b), 27(c), 27(d)) zu formen, der eine Schicht (20(a), 20(b)) besagten Elastomers enthält, wobei besagtes Elastomer einen größeren Reibungskoeffizienten als die Oberfläche des Behälters (22) hat, wobei der gesamte Greifbereich (26(a), 26(b), 26(c), 26(d), 27(a), 27(b), 27(c), 27(d)) eine Schicht (20(a), 20(b)) besagten Elastomers aufweiset und die Schicht (20(a), 20(b)) von Elastomer sich einzig im Greifbereich (26(a), 26(b), 26(c), 26(d), 27(a), 27(b), 27(c), 27(d)) des Behälters (22) befindet, sodass die vorderen und hinteren Oberflächen des Behälters (22) von Elastomer frei gelassen sind.

5. Ein Verfahren zum Anfertigen eines Anspruch 4 entsprechenden aus Behälters (22), bei welchem die rechts- und die linksseitige Oberfläche jeweils einen Greifbereich (26(a), 26(b), 26(c), 26(d), 27(a), 27(b), 27(c), 27(d)) aufweisen und der gesamte Greifbereich (26(a), 26(b), 26(c), 26(d), 27(a), 27(b), 27(c), 27(d)) mit einer Schicht (20(a), 20(b)) besagten Elastomers versehen ist.

6. Ein Verfähren Anfertigen eines den Ansprüchen 4 oder 5 entsprechenden blasgeformten Behälters, wobei der Behälter (22) einen zylindrischen Querschnitt hat.

## Revendications

1. Un récipient moulé par soufflage (22) avec des moyens de préhension améliorés comprenant un récipient moulé par soufflage (22) possédant un corps de récipient (28) et une sortie de distribution de récipient, le corps de récipient (28) possédant une surface avant, une surface arrière et une surface de côté droit et une surface de côté gauche connectant la surface avant à la surface arrière, caractérisé en ce au moins une de la surface de côté droit et de la surface de côté gauche possède une zone de préhension (26(a), 26(b), 26(c), 26(d), 27(a), 27(b), 27(c), 27(d)), la zone de préhension (26(a), 26(b), 26(c), 26(d), 27(a), 27(b), 27(c), 27(d)) surmoulée avec un élastomère pour former un récipient moulé par soufflage (22) avec la zone de préhension (26(a), 26(b), 26(c), 26(d), 27(a), 27(b), 27(c), 27(d)) contenant une couche (20(a), 20(b)) dudit élastomère, l'élastomère ayant un coefficient de friction supérieur au coefficient de friction de la surface dudit récipient (22), dans lequel toute la zone de préhension (26(a), 26(b), 26(c), 26(d), 27(a), 27(b), 27(c), 27(d)) possède une couche (20(a), 20(b)) dudit élastomère, et la couche (20(a), 20(b)) d'élastomère se trouve seulement sur la zone de préhension (26(a), 26(b), 26(c), 26(d), 27(a), 27(b), 27(c), 27(d)), laissant les surfaces avant et arrière du récipient (22) libres d'élastomère,

2. Un récipient moulé par soufflage selon la revendication 1 lequel la surface de côté droit et la surface de côté gauche possèdent chacune une zone de préhension (26(a), 26(b), 26(c), 26(d), 27(a), 27(b), 27(c), 27(d)), toute la zone de préhension (26(a), 26(b), 26(c), 26(d), 27(a), 27(b), 27(c), 27(d)) possédant une couche (20(a), 20(b)) dudit élastomère.

3. Un récipient moulé par soufflage selon la revendication 1 dans lequel le récipient (22) cylindrique.

4. Un procédé de fabrication d'un récipient moulé par soufflage (22) selon l'une quelconque des revendications de 1 à 3 avec une préhension améliorée, le récipient (22) possédant un corps de récipient (28) et une sortie de distribution de récipient, le corps de récipient (28) possédant une surface avant, une surface arrière et une surface de côté droit et une surface de côté gauche connectant la surface avant à la surface arrière, dans lequel au moins une de la surface de côté droit et de la surface de côté gauche possède une zone de préhension (26(a), 26(b), 26(c), 26(d), 27(a), 27(b), 27(c), 27(d)), la zone de préhension (26(a), 26(b), 26(c), 26(d), 27(a), 27(b), 27(c), 27(d)) surmoulée avec un élastomère, le procédé comprenant la fourniture d'une préforme (10) qui possède une couche d'élastomère (20(a), 20(b)) de manière sélective sur la préforme (10) pour se conformer à la zone de préhension (26(a), 26(b), 26(c), 26(d), 27(a), 27(b), 27(c), 27(d)) du récipient moulé par soufflage (22), fournissent un moule avec une cavité de moule ayant sur sa surface intérieure le négatif de la zone de préhension (26(a), 26(b), 26(c), 26(d), 27(a), 27(b), 27(c), 27(d)) dans la surface intérieure de cavité de moule ; orienter la préforme (10) dans la cavité de moule de telle sorte que la couche élastomère (20(a), 20(b)) est adjacente au négatif de la zone de préhension (26(a), 26(b), 26(c), 26(d), 27(a), 27(b), 27(c), 27(d)) ; injecter un gaz dans la préforme (10) pour souffler la paroi de préforme (10) vers la surface de la cavité de moule grâce à quoi la couche élastomère (20(a), 20(b)) de la préforme (10) contactera le négatif de la zone de préhension (26(a), 26(b), 26(c), 26(d), 27(a), 27(b), 27(c), 27(d)) sur la surface de la cavité de moule pour former un récipient moulé par soufflage (22) avec la zone de préhension (26(a), 26(b), 26(c), 26(d), 27(a), 27(b), 27(c), 27(d)) contenant une couche (20(a), 20(b)) dudit élastomère, ledit élastomère ayant un coefficient de friction supérieur à celui de la surface du récipient (22), dans lequel toute la zone de préhension (26(a), 26(b), 26(c), 26(d), 27(a), 27(b), 27(c), 27(d)) possède une couche (20(a), 20(b)) dudit élastomère, et la couche (20(a), 20(b)) d'élastomère se trouve seulement sur la zone de préhension (26(a), 26(b), 26(c), 26(d), 27(a), 27(b), 27(c), 27(d)) du récipient (22), laissant les surfaces avant et arrière libres d'élastomère.

5. Un procédé de fabrication d'un récipient moulé par soufflage (22) selon la revendication 4 dans lequel la surface de côté droit et la surface de côté gauche possèdent chacune une zone de préhension (26(a), 26(b), 26(c), 26(d), 27(a), 27(b), 27(c), 27(d)), toute la zone de préhension (26(a), 26(b), 26(c), 26(d), 27(a), 27(b), 27(c), 27(d)) possédant une couche (20(a), 20(b)) dudit élastomère.

6. Un procédé de fabrication d'un récipient moulé par soufflage (22) selon l'une quelconque des revendications 4 ou 5 dans lequel le récipient (22) a une section transversale cylindrique.
